# EUROPEAN PATENT APPLICATION

(11) **EP 4 707 917 A1**
(43) Date of publication of application: **11.03.2026**
(21) Application number: 24198736.1
(22) Date of filing: 05.09.2024
(51) Int. Cl.: G03B 17/08, B29C 65/08, A01K 29/00, G01D 11/24

(54) **AN ENCLOSURE AND A SENSOR ASSEMBLY FOR A MONITORING STATION**

(71) Applicant: OWL Sentry Sp. z o.o., 50-045 Wroclaw (PL)
(72) Inventor: PULAWSKI, Edward, 50-045 Wroclaw (PL); KIKOMBER, Dawid, 05-045 Wroclaw (PL)
(74) Representative: Markieta, Jaroslaw Franciszek

(57) **Abstract**

The sensor enclosure (1) comprising an enclosure housing, which includes an upper part (10) and a lower part (20), made from a material permeable to electromagnetic waves. The sensor enclosure is characterised by the upper part (10) and lower part (20) of the enclosure housing being permanently and tightly connected using ultrasonic welding. The subject of the application also includes a sensor assembly housed within the enclosure according to the invention.

## Description

This invention relates to an enclosure and a sensor assembly for a monitoring station, specifically designed for monitoring the movement of animals or humans. The invention is used in pest traps, particularly for rodents. However, it can also be applied in other types of stations that monitor the migration of animals, humans, or vehicles, as well as stations that capture and/or control pests such as small mammals, reptiles, amphibians, and insects, in environments where monitoring devices are exposed to environmental factors.

In prior art, a common solution for maintaining the seal of a device enclosure containing optical sensors is to glue windows into appropriately cut openings in the sensor assembly's enclosure. One such example is EP3699876A1, in which a protective window is positioned in the sensor's optical path, acting as a barrier that separates the interior of the sensor assembly from the measurement environment.

An intermediate solution that addresses certain known issues related to disruptions in the sensor's optical path is the direct mounting of a lens in the enclosure's opening. For instance, US4682030A discloses an infrared sensor enclosure with an opening for the optical path, where a Fresnel lens is used to focus electromagnetic waves of a specific wavelength, in this case, infrared waves.

The core of the invention is a sensor enclosure comprising a housing with an upper and lower part, both made from a material permeable to electromagnetic waves. The invention is characterised by the permanent and tight connection of the upper and lower parts using ultrasonic welding.

Preferably, the invention is characterised by the sensor enclosure containing at least one integrated optical element that interacts with electromagnetic waves to a lesser extent than the enclosure housing.

Preferably, the enclosure according to the invention is characterised by the sensor housing being made of transparent polypropylene.

Preferably, the enclosure according to the invention is characterised by the integrated optical element being a lens selected from the group including biconvex, plano-convex, concave-convex, convex-concave, plano-concave, biconcave lenses, and Fresnel lenses.

Preferably, the enclosure according to the invention is characterised by the integrated optical element being an embossing with a thickness less than that of the housing wall.

Preferably, the enclosure according to the invention is characterised by the embossing being flat, with a thickness ranging from 0.2 mm to 0.8 mm, preferably 0.6 mm.

Preferably, the sensor enclosure according to the invention is characterised by being equipped with elements that stabilise the position of the sensor relative to the enclosure.

Preferably, the sensor enclosure according to the invention is characterised by the upper part of the enclosure housing containing a stabilising groove and the lower part containing a stabilising protrusion at the connection point between the two parts, which work together to stabilise their relative position.

Preferably, the sensor enclosure according to the invention is characterised by the fact that, at the connection point between the two parts of the enclosure housing, the upper part of the enclosure housing contains a stabilising groove and the lower part of the enclosure housing contains a stabilising protrusion, which work together to increase the contact surface between the two parts of the enclosure housing during the ultrasonic welding process, increasing the strength of the formed connection.

Preferably, the sensor enclosure according to the invention is characterised by the fact that, at the connection point between the two parts of the enclosure housing, the lower part of the enclosure housing contains a stabilising groove, and the upper part of the enclosure housing contains a stabilising protrusion, which work together to stabilise the mutual position of the two parts of the enclosure housing.

Preferably, the sensor enclosure according to the invention is characterised by the fact that, at the connection point between the two parts of the enclosure housing, the lower part of the enclosure housing contains a stabilising groove, and the upper part of the enclosure housing contains a stabilising protrusion, which work together to increase the contact surface between the two parts of the enclosure housing during the ultrasonic welding process, thereby increasing the strength of the formed connection.

The invention also involves a sensor assembly for a movement monitoring station, which includes at least one optical sensor, an electronic module that receives and processes signals from the sensor, provides wireless communication, and a battery power source, all housed within the enclosure as described in the invention.

Preferably, the sensor assembly according to the invention is characterised by the enclosure, at the location corresponding to the sensor's optical path, containing at least one integrated optical element, which focuses electromagnetic waves within the wavelength range corresponding to the operating range of the optical sensor.

Preferably, the sensor assembly according to the invention is characterised by the enclosure, at the location corresponding to the sensor's optical path, containing at least one integrated optical element, which focuses electromagnetic waves within the wavelength range corresponding to the operating range of the optical sensor.

Preferably, the sensor assembly according to the invention is characterised by the enclosure, at the location corresponding to the sensor's optical path, containing at least one integrated optical element that is an embossing with a thickness less than that of the enclosure housing wall.

The advantage of the housing according to the invention is its complete sealing, providing protection against external factors such as high humidity or dust, which cannot penetrate the enclosure. The integrated construction of elements interacting with electromagnetic radiation ensures ease of production, while eliminating potential leaks that could arise from the installation of components such as lenses in openings made in the enclosure. This solution, combined with ultrasonic welding along the edges of the enclosure housing, guarantees that the interior of the device is fully isolated from external factors.

Another advantage of the enclosure according to the invention is the elimination of additional obstructions from the optical path that weaken or spatially distort the measured light beam. The integration of the lens into the enclosure eliminates the need for additional optical elements. Additionally, the enclosure housing in the assembly according to the invention can be cost-effectively produced through an injection moulding process using the same material as the enclosure itself, thereby reducing production costs by eliminating the need for assembling additional components.

The invention is further illustrated in a favourable embodiment through the following figures, where:
- Fig. 1: shows the sensor enclosure according to the invention in the first embodiment;
- Fig. 2: shows the sensor enclosure according to the invention in the second embodiment;
- Fig. 3: shows a cross-section of the sensor enclosure in a favourable embodiment of the invention;
- Fig. 3a: shows an enlarged cross-section of the connection of the sensor enclosure in a favourable embodiment of the invention;
- Fig. 4: shows an enlarged cross-section at the connection point of the sensor enclosure housing in another favourable embodiment of the invention;
- Fig. 4a: shows an enlarged cross-section of the connection point of the sensor enclosure housing in yet another favourable embodiment of the invention.

In the most general embodiment of the invention, the enclosure housing is permeable to electromagnetic radiation and can accommodate magnetic sensors that respond to the presence of a magnetic field and/or optical sensors that react to an electromagnetic field across a wide frequency range, from infrared to ultraviolet.

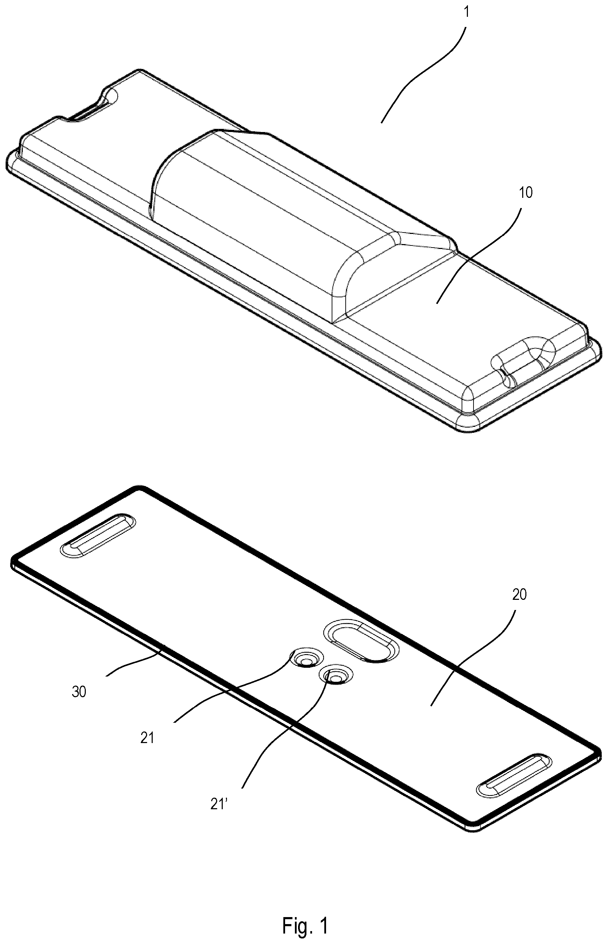

Fig. 1 shows a sensor enclosure in the first embodiment of the invention. The sensor enclosure 1, preferably used in a station monitoring the movement of people or animals, consists of an enclosure housing with an upper part 10 and a lower part 20, which house at least one sensor, an electronic block for receiving and processing signals from the sensor, providing wireless communication, and a power source in the form of a battery. In the version with an optical sensor, the enclosure 1, at the location corresponding to the sensor's optical path, contains at least one, or two in the case of dual sensors, integrated optical elements 21, 21' that interact with electromagnetic waves within a wavelength range corresponding to the sensor's operating range, and the upper part 10 and lower part 20 are permanently and tightly connected using ultrasonic welding. In the variant where an integrated optical element is present, it interacts with electromagnetic waves to a lesser extent than the enclosure housing, with "lesser extent" referring to quantitative effects, meaning the integrated optical element attenuates, absorbs, or scatters electromagnetic waves less than the wall of the enclosure housing. The introduction of the integrated optical element establishes an optical path with enhanced transmission properties for electromagnetic waves in the optical range. The beneficial technical effect is evident in the increased amount of light reflected from observed objects and returning to the sensor. Additionally, the integrated optical element aids in the illumination of the object by a transmitter-receiver sensor, such as infrared sensors that measure the travel time of a light beam along the sensor-object-sensor path. The "lesser extent" also refers to qualitative effects, meaning that for sensors requiring light beam focusing, the optical element possesses better focusing properties than the rest of the enclosure, thus interfering less with the optical sensor's operation.

At the connection point 30 between the upper part 10 and the lower part 20, at least one part, and preferably both parts, of the enclosure housing 1, are designed for ultrasonic welding. This adaptation includes the creation of structures that stabilise the relative position of the upper part 10 and the lower part 20, while also increasing the contact surface between them. These structures may consist of stabilising grooves and protrusions, as well as stabilising holes and pins. The stabilising structures may be located on part of the connecting surface or around the entire perimeter of the upper part 10 and lower part 20. Alternatively, external elements that are not part of the enclosure may be used to stabilise the relative position of both parts of the enclosure.

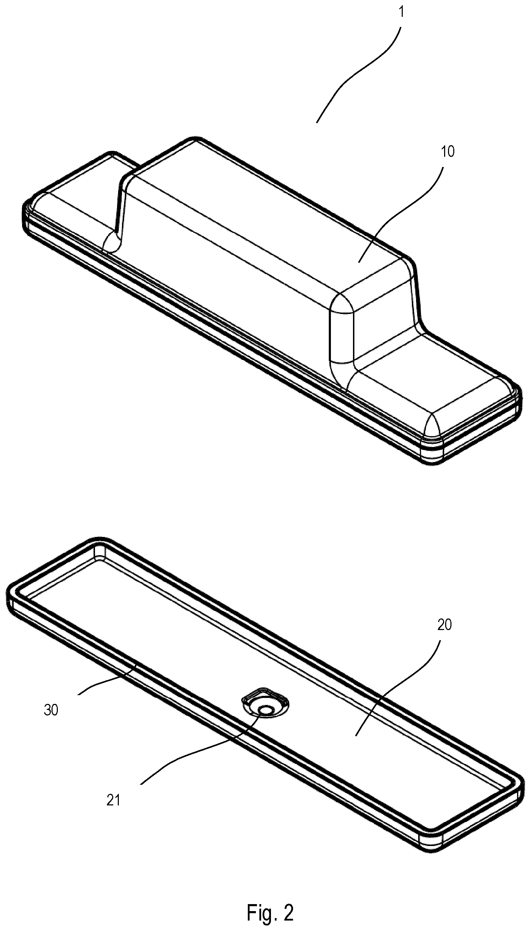

Fig. 2 shows a second embodiment of the sensor enclosure 1 with an optical sensor, where the lower part 20 is equipped with a single optical element 21 that focuses electromagnetic waves within the wavelength range corresponding to the operating range of the optical sensor, and the upper part 10 and lower part 20 are permanently and tightly connected via ultrasonic welding at the connection point 30.

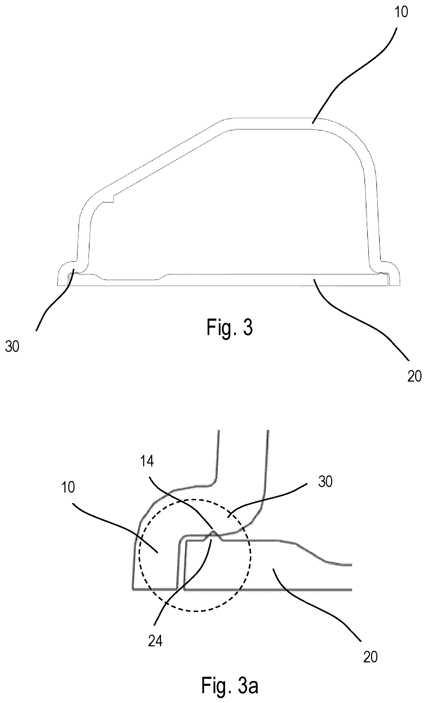

Fig. 3 illustrates a cross-section of another advantageous embodiment of the sensor enclosure housing according to the invention. At the connection point 30 between the two parts of the enclosure, the upper part 10 of the enclosure housing contains a stabilising groove 14, while the lower part 20 contains a stabilising protrusion 24, which work together to stabilise the relative position of the two parts of the enclosure housing. Construction details are shown in Fig. 3a. At the connection point 30 between the two parts of the enclosure housing, the upper part 10 of the enclosure housing contains a stabilising groove 14, while the lower part of the enclosure housing contains a stabilising protrusion 24, which cooperate to increase the contact surface between the two parts 10, 20 of the enclosure housing during the ultrasonic welding process, thus increasing the strength of the formed connection. In this embodiment, two planes are welded at 90 degrees to each other, creating a large joining area that, in addition to providing mechanical strength, ensures the tightness of the joint.

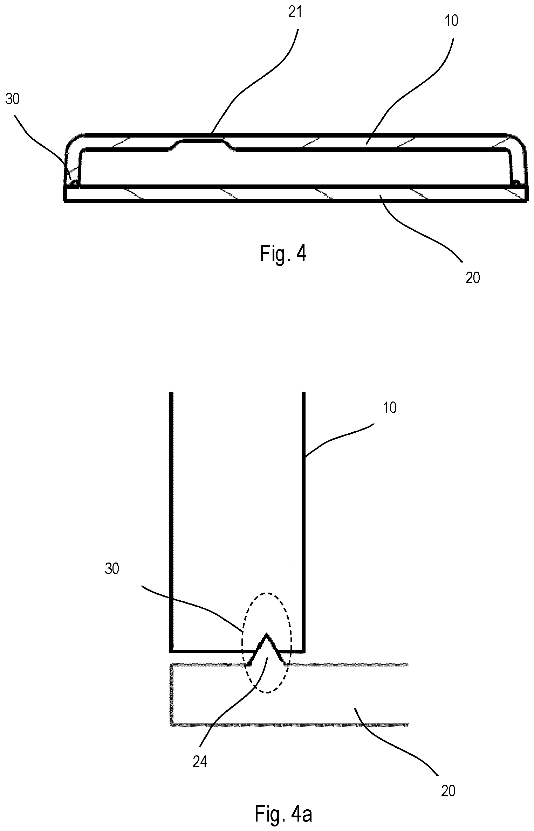

Figs. 4 and 4a illustrate another advantageous embodiment of the invention, in which the connection point is located between the side wall of the lower part 20 of the enclosure housing and the front surface of the upper part 10 of the enclosure housing. On the front surface of the upper part 10 of the enclosure housing, there is a stabilising protrusion 14, and on the side surface of the lower part 20 of the enclosure housing, near its open edge, there is a groove 24 that receives the protrusion 14. In this embodiment, the connection point is smaller than in the previous example; however, this version is much easier to produce using injection moulding, and the enclosure is easier to assemble.

Alternatively, the stabilising protrusions and grooves can be arranged in the reverse configuration to the one described. In this reverse configuration, at the connection point 30 between the two parts of the enclosure housing, the lower part 20 of the enclosure housing contains a stabilising groove 14, while the upper part 10 of the enclosure housing contains a stabilising protrusion 24, which work together to increase the contact surface between the two parts of the enclosure housing during the ultrasonic welding process, thereby increasing the strength of the formed connection.

Preferably, the sensor's enclosure housing is made of transparent polypropylene. However, it can also be made from another plastic material that offers suitable light transmission for the optical sensor's operating range or magnetic permeability for a magnetic sensor. Ideally, the enclosure housing is made from a material that can be shaped using injection moulding, thermoforming, or machining, and can be bonded using ultrasonic welding techniques.

The integrated optical element 21, 21' is an embossing with a thickness smaller than that of the enclosure housing wall. Preferably, the embossing is a flat embossing with a thickness ranging from 0.2 mm to 0.8 mm, preferably 0.6 mm.

In a favourable embodiment of the invention, the enclosure is used in the optical sensor assembly of a monitoring station for animal migration, consisting of an enclosure housing with an upper part 10 and a lower part 20, housing at least one optical sensor, an electronic block that receives and processes signals from the sensor and provides wireless communication, and a power source in the form of a battery. By placing the electronic components inside the enclosure according to the invention, the sensor assembly is effectively isolated from external factors such as moisture, dust, and biological agents.

At least one optical sensor, an electronic block that receives and processes signals from the sensor and provides wireless communication, along with a power source in the form of a battery, are known from international patent application PCT/PL20023/050111, the content of which is incorporated herein by reference.

The enclosure housing is fitted with elements that stabilise the position of the optical sensor within the enclosure.

The integrated optical element 21, 21' is a lens selected from the group comprising biconvex, plano-convex, concave-convex, convex-concave, plano-concave, biconcave lenses, and Fresnel lenses. The lens selection is made during the sensor assembly design stage and is customised to the parameters of the sensor's optical path. The lenses are manufactured integrally with the enclosure housing as part of the same production process, using the same material from which the enclosure is made.

In another advantageous embodiment of the invention, the integrated optical element 21, 21' is a flat embossing with a thickness less than that of the enclosure housing wall. Flat embossings are characterised by high optical permeability, which positively impacts the sensor's working conditions and enhances its sensitivity by reducing dimming or blinding caused by light reflected from the enclosure material. Preferably, the embossing is a flat embossing with a thickness ranging from 0.2 mm to 0.8 mm, preferably 0.6 mm.

## Claims

1. A sensor enclosure (1) comprising
an enclosure housing, which includes an upper part (10) and a lower part (20), made of a material permeable to electromagnetic waves,
**characterised in that**
the upper part (10) and the lower part (20) are permanently and tightly connected using ultrasonic welding.

2. The sensor enclosure according to claim 1, **characterised by** the enclosure housing containing at least one integrated optical element (21, 21') that interacts with electromagnetic waves to a lesser extent than the enclosure housing.

3. The sensor enclosure according to claim 1 or 2, **characterised by** the enclosure housing being made of transparent polypropylene.

4. The sensor enclosure according to any of claims 2 or 3, **characterised by** the integrated optical element (21, 21') being a lens selected from the group comprising biconvex, plano-convex, concave-convex, convex-concave, plano-concave, biconcave lenses, and Fresnel lenses.

5. The sensor enclosure according to any of claims 2 to 4, **characterised by** the integrated optical element (21, 21') being an embossing with a thickness less than that of the enclosure housing wall.

6. The enclosure according to claim 5, **characterised by** the embossing being a flat embossing with a thickness ranging from 0.2 mm to 0.8 mm, preferably 0.6 mm.

7. The sensor enclosure according to any of claims 1 to 6, **characterised by** the enclosure housing being equipped with elements that stabilise the position of the sensor relative to the enclosure.

8. The sensor enclosure according to any of claims 1 to 7, **characterised in that** at the connection point (30) between the two parts of the enclosure, the upper part (10) of the enclosure housing contains a stabilising groove (14), and the lower part (20) of the enclosure housing contains a stabilising protrusion (24), which work together to stabilise the relative position of the two parts of the enclosure housing.

9. The sensor enclosure according to any of claims 1 to 8, **characterised in that** at the connection point (30) between the two parts of the enclosure housing, the upper part (10) of the enclosure contains a stabilising groove (14), and the lower part (20) of the enclosure contains a stabilising protrusion (24), which cooperate to increase the contact surface between the two parts of the enclosure housing during the ultrasonic welding process, thereby increasing the strength of the formed connection.

10. The sensor enclosure according to any of claims 1 to 8, **characterised in that** at the connection point (30) between the two parts of the enclosure housing, the lower part (20) of the enclosure housing contains a stabilising groove (14), and the upper part (10) of the enclosure housing contains a stabilising protrusion (24), which work together to stabilise the mutual position of the two parts of the enclosure housing.

11. The sensor enclosure according to any of claims 1 to 10, **characterised in that** at the connection point (30) between the two parts of the enclosure housing, the lower part (20) of the enclosure housing contains a stabilising groove (14), and the upper part (10) of the enclosure housing contains a stabilising protrusion (24), which work together to increase the contact surface between the two parts of the enclosure housing during the ultrasonic welding process, thereby increasing the strength of the formed connection.

12. A sensor assembly for a movement monitoring station, containing at least one optical or magnetic sensor, an electronic block for receiving and processing signals from the sensor and providing wireless communication, and a power source in the form of a battery, all housed within an enclosure (1) in accordance with any of claims 1 to 11.

13. The sensor assembly according to claim 12, **characterised by** the enclosure containing at least one integrated optical element (21, 21') at the location corresponding to the sensor's optical path, which focuses electromagnetic waves within the wavelength range corresponding to the optical sensor's operating range.

14. The sensor assembly according to claim 12 or 13, **characterised by** the enclosure at the location corresponding to the sensor's optical path containing at least one integrated optical element (21, 21'), which is an embossing with a thickness less than that of the enclosure housing wall.
